# EUROPÄISCHE PATENTSCHRIFT

(11) **EP 1 874 834 B1**
(45) Veröffentlichungstag und Bekanntmachung des Hinweises auf die Patenterteilung: **10.09.2008**
(21) Anmeldenummer: 05708765.2
(22) Anmeldetag: 16.03.2005
(51) Int. Cl.: C08F 226/08, C08F 220/12, C08F 8/12, A61L 27/16, A61L 31/14, A61F 2/12, C08L 33/02, C08L 39/06

(54) **POLYMERES HYDROGEL**
HYDROGEL POLYMER
HYDROGEL POLYMERE

(43) Veröffentlichungstag der Anmeldung: 09.01.2008
(73) Patentinhaber: KIRCHEISEN, Michael, 79258 Hartheim (DE)
(72) Erfinder: KIRCHEISEN, Michael, 79258 Hartheim (DE)
(74) Vertreter: Lusuardi, Werther
(86) Internationale Anmeldenummer: PCT/IB2005/000691
(87) Internationale Veröffentlichungsnummer: WO 2006/097781

(56) Entgegenhaltungen:
- EP-A- 0 598 881
- EP-A- 1 214 953
- US-A- 5 116 371
- WIESE K G ET AL: "BIOMATERIAL PROPERTIES AND BIOCOMPATIBILITY IN CELL CULTURE OF A NOVEL SELF-INFLATING HYDROGEL TISSUE EXPANDER" JOURNAL OF BIOMEDICAL MATERIALS RESEARCH, WILEY, NEW YORK, NY, US, Bd. 54, Nr. 2, Februar 2001 (2001-02), Seiten 179-188, XP009049073 ISSN: 0021-9304
- WIESE, K.-G.: "Gewebedehnung mit osmotisch-aktiven Hydrogelsystemen" 1998, QUINTESSENZ VERLAGS-BMBH , BERLIN , XP002340350 Seite 3 - Seite 5 Seite 25 - Seite 32 Seite 83 - Seite 85
- RONERT M A ET AL: "THE BEGINNING OF A NEW ERA: SELF-FILLING TISSUE EXPANDER FOR DEFECT COVERAGE IN A 3-YEAR-OLD BOY WITH A RETROAURICULAR NEVUS" PLASTIC AND RECONSTRUCTIVE SURGERY, WILLIAMS AND WILKINS CO., BALTIMORE, MD, US, Bd. 112, Nr. 1, Juli 2003 (2003-07), Seiten 189-191, XP009048978 ISSN: 0032-1052

## Beschreibung

Die folgende Erfindung bezieht sich auf eine polymeres Hydrogel gemäss dem Oberbegriff des Anspruchs 1 und seine Verwendung gemäss dem Anspruch 10.

Die erfindungsgemässen polymeren Hydrogele haben sich insbesondere als Dauerimplantate zur Vergrösserung der Brust oder zur Auffüllung von grossen Hautfalten bewährt. Die Funktion des Dauerimplantats besteht darin, dass es in einem Zustand relativer Trockenheit am gewünschten Ort im Körper eingesetzt wird und dann durch Aufnahme von Körperflüssigkeit bis zu einer im voraus bestimmten Grösse (bestimmt durch den Schwellungskoeffizienten des Materials) anschwillt.

Aus dem Stand der Technik sind bereits einige andere Materialien zu diesem Zweck bekannt geworden, welche aber den Nachteil besitzen im Körper resorbierbar zu sein. Andere bekannte Implantate, z.B. sogenannte Gewebeexpander, werden bloss temporär eingesetzt, so dass keine dauerhafte Wirkung damit erzielbar ist.

Aufgabe der Erfindung ist es die oben erwähnten Nachteile des Standes der Technik zu überwinden und ein sicheres Dauerimplantat zu schaffen, welches der jeweiligen Anwendung anpassbar ist und einen genügend hohen Schwellungskoeffizienten aufweist.

Erfindungsgemäss wird dies durch ein polymeres Hydrogel gemäss den Merkmalen des Anspruchs 1 erreicht.

Dauerimplantate, welche das erfindungsgemässe polymere Hydrogel enthalten, weisen im Vergleich zum Stand der Technik u.a. folgende Vorteile auf:
- Hohe Biokompatibilität / Nicht abbaubar;
- Durch Wasseraufnahme von bis zu 98,5% wird eine sehr geringe Menge an Fremdmaterial eingebracht;
- Verringerung der OP-Zeiten;
- Vereinfachte OP- Methode und damit Verringerung des Infektionsrisikos;
- Verkleinerung der Schnitte und damit Reduzierung der OP-bedingten Narbenbildung;
- Kann als festes Material injiziert oder eingebracht werden;
- OP in örtlicher Betäubung möglich;
- Keine Silikon- oder andere Hülle erforderlich; und
- Dosierbarkeit in kleinen Schritten und Nachdosierung eines weiteren Implantats ist möglich

Zur Herstellung des polymeren Hydrogels haben sich im speziellen Methacrylsäureester, vorzugsweise der Methyacrylsäure-methylester bewährt. Vorteilhafterweise sind im polymeren Hydrogel mehr als 35 % , vorzugsweise mehr als 40 % der Estergruppen verseift. Im polymeren Hydrogel sollten vorteilhafterweise weniger als 75 % , vorzugsweise weniger als 70 % der Estergruppen verseift sein. Der Verseifungsgrad des Hydrogels kann in diesem Zusammenhang durch bekannte Analyse-Verfahren bestimmt werden.

Bei einer besonderen Ausführungsform liegt das Gewichtsverhältnis zwischen dem Acrylsäureester und dem N-Vinylpyrrolidon im Bereich zwischen 0,1 - 0,67, vorzugsweise zwischen 0,33 - 0,53.

Bei einer Quellung in physiologischer Kochsalzlösung sollte der Schwellungskoeffizient des polymeren Hydrogels vorteilhafterweise 20 bis 80, vorzugsweise 35 bis 60 betragen.

Die bevorzugt angegebenen Bereiche für den Verseifungsgrad, das Gewichtsverhältnis der beiden Komponenten sowie den Schwellungskoeffizienten haben für die besonderen ins Auge gefassten Anwendungen zu optimal sich verhaltenden Dauerimplantaten geführt. Durch die Einstellung des Verseifungsgrades lässt sich der Schwellungskoeffizient variieren und damit die gewünschte Weichheit des Dauerimplantates einstellen. Bei einem hohen Verseifungsgrad sind die erhaltenen Hydrogele sehr weich und damit vergleichbar zum Fettgewebe. Wird ein steiferes Implantat gewünscht, dann ist ein geringerer Verseifungsgrad zu wählen.

Bei einer besonderen Ausführungsform besitzt das polymere Hydrogel einen pH-Wert im Bereich von 6,4 bis 7,9 , vorzugsweise von 6,7 bis 7,3. In diesem pH-Bereich konnte eine optimale Gewebeverträglichkeit erzielt werden.

Bei einer weiteren Ausführungsform besitzt das polymere Hydrogel einen Gehalt ans Restmonomeren von weniger als 0,01 Gew.-%, vorzugsweise weniger als 0,001 Gew.-% . Diese reduzierten Mengen an unreagierten Restmonomeren werden durch mehrfaches Auswaschen des Hydrogels mit Wasser erhalten und haben sich im Zusammenhang mit der geringen Menge an zu implantierendem Hydrogel als hochgradig bioverträglich erweisen, so dass die Gefahr von allergischen Reaktionen und anderen Abwehrreaktionen des Körpers minimiert ist.

Bei einer weiteren Ausführungsform weist das Copolymerisat in einem wässerigen Medium die Eigenschaft auf, dass es nicht degradierbar oder resorbierbar ist. Der Vorteil dieser Ausführungsform besteht darin, dass keine schädlichen Abbauprodukte im Körper entstehen.

Das erfindungsgemässe polymeren Hydrogels findet vorteilhafterweise Verwendung als quellbares Dauerimplantat zur Vergrösserung der Brust oder zur Auffüllung von Hautfalten. Das Dauerimplantat weist vor der Quellung durch Aufnahme von Körperflüssigkeit vorteilhafterweise eine kugelförmige Gestalt auf und der Kugeldurchmesser beträgt vorzugsweise 6 - 15 mm. Typischerweise wurden Kugel mit einem Durchmesser von 8 - 12 mm verwendet. Das kugelförmige Dauerimplantat eignet sich besonders gut für die Brustaugmentation. Durch die Kugelform wird im Falle von mehreren Teilimplantaten eine günstige Verbindung der einzelnen Kugeln im gequollenen Zustand gewährleistet.

Bei einer alternativen Ausführungsform weist das Dauerimplantat vor der Quellung durch Aufnahme von Körperflüssigkeit eine zylinderförmige Gestalt auf und der Kreiszylinderdurchmesser beträgt vorzugsweise 0,5 bis 3 mm. Typischerweise wurden Zylinder mit einem Kreisdurchmesser von 1,5 - 2,5 mm verwendet. Das Verhältnis UD zwischen Zylinderlänge L und dem Kreiszylinderdurchmesser D liegt vorteilhafterweise im Bereich von 1,5 bis 5,0, vorzugsweise von 2,0 - 4,0. Die zylinderförmige Implantate dieser Gestalt haben zu besonders guten Ergebnissen bei der Auffüllung von Hautfalten geführt.

Bei einer weiteren Ausführungsform besteht das Dauerimplantat vorteilhafterweise aus 2 - 30, vorzugsweise aus 3-20 Teilimplantaten. Das Dauerimplantat oder die einzelnen Teilimplantate weisen - vor einer Quellung durch Aufnahme von Wasser - typischerweise ein Volumen von 0,01 - 2,00 ml auf. Im weiteren weist das Dauerimplantat - vor einer Quellung durch Aufnahme von Körperflüssigkeit - vorteilhafterweise einen Wassergehalt von weniger als 15 Gew.% auf. Ein bevorzugter Bereich für den Wassergehalt beträgt 5 - 10 Gew.%.

Bei einer weiteren Ausführungsform liegt das Verhältnis P/D zwischen dem Prozentsatz P verseifter Estergruppen und dem mittleren Durchmesser D des Dauerimplantates oder der einzelnen Teilimplantate im Bereich von 2,4 bis 12,0, vorzugsweise von 3,0 bis 10,0.

Bei einer weiteren Ausführungsform weist das Dauerimplantat oder die einzelnen Teilimplantate keine Umhüllung auf. Gegenüber bekannten Implantaten mit einer Hülle, insbesondere einer Silikonhülle ergeben sich die folgenden Vorteile:
- es wird kein zusätzliches Fremdmaterial in den Körper eingebracht, so dass Wechselwirkungen damit ausgeschlossen werden;
- geringere Kapselbildung; und
- kein festes ganzes Teil, d.h. Einzeldosierung wird ermöglicht und damit die Narbenbildung minimiert.

Im folgenden werden einige Beispiel für die Herstellung des erfindungsgemässen Hydrogels und für klinische Anwendungsfälle der damit hergestellten Dauerimplantate anhand ihrer Operationstechnik näher beschrieben.

### Beispiel 1:

Methylacrylsäuremethylester und N-Vinylpyrrolidon wurden im Gewichtsverhältnis von 1: 0,43 zu Halbzeugen polymerisiert. Daraus wurden Kugeln mit einem Durchmesser von 10 mm, entsprechend einem Volumen von ca. 0,5 ml, herausgearbeitet. Nach Ausspülung der Rest-Monomere und Oligomere mit Wasser wurden die Kugeln durch Verseifung mit Natronlauge in ein ionisches Hydrogel überführt.

Am Ende des Herstellungsverfahrens erhielt man wiederum eine feste Ausgangskugel von ca. 0,5 ml Volumen mit einem Restwassergehalt (pyrogenfreies Wasser) von ca. 13 Gew.-%, einem Restgehalt an monomerem Methylacrylsäuremethylester von 0,00022 Gew.% und einem Restgehalt an monomerem N-Vinylpyrrolidon von 0,00014 Gew.-%.

Bei der Herstellung wurde die Verseifungszeit so gewählt, dass ein Verseifungsgrad von ca. 50% und ein Schwellungskoeffizient von ca. 40 erreicht wurde, d.h. das Volumen einer in physiologischer Kochsalzlösung gequollenen Kugel betrug das 40-fache der noch ungeqollenen Ausgangskugel.

Die kugelförmigen Implantate wurden gemäß nachstehender Operationsbeschreibung zur Brustaugmentation in örtlicher Betäubung verwendet:
a) Zunächst Anzeichnen der Brustdrüsenumrisslinien bei der stehenden Patientin.
b) Legen eines i.v.-Zuganges.
c) Applikation der Dormikumsedierung.
d) Gabe von 1,5 Gramm Cefuroxim als ,single shot' Antibiose.
e) Danach Infiltration der geplanten Inzision in der Unterbrustfalte sowie der Brustbasis mit Lokalanästhetikum.
f) Jetzt Durchtrennung der Haut auf 2 cm Länge in der Unterbrustfalte.
g) Von dort Präparation der Implantattasche unter Sicht mit dem Elektrokauter (epipektoral bei ausreichender Drüsengröße, subpektoral bei dünnem Weichteilmantel). Sorgfältige Blutstillung mit der Bipolarpinzette.
h) Danach Spülung der Tasche mit Kochsalzlösung.
i) Jetzt Einbringen einer Anzahl von kugelförmigen Einzelimplantaten aus dem erfindungsgemässen polymeren Hydrogel in die fertige Tasche (Anzahl entsprechend dem präoperativ mit der Patientin festgelegten Endvolumen).
j) Im Anschluß Verschluß der Implantattasche mit 3x0 Vicryl für die Adaptation von Drüse und Faszie, 4x0 Vicryl subkutan und 4x0 Prolene für die intrautane Hautnaht.
k) Aufbringen von Tegadermpflaster.
l) Anlegen einer Leibbinde zur Kompression für 24 Stunden.

Im vorliegendem Fall wurde präoperativ mit der Patientin ein Endvolumen von 200 ml abgestimmt. Um dies zu erreichen, wurden 10 Kugeln mit einem Ausgangsvolumen von ca. 5ml verwendet. Durch Aufnahme von Körperflüssigkeit wurde das angestrebte Endvolumen nach ca. 10 Tagen erreicht.

### Beispiel 2:

Methylacrylsäuremethylester und N-Vinylpyrrolidon wurden im Gewichtsverhältnis von 1: 0,25 zu Halbzeugen polymerisiert. Daraus wurden zylinderförmige Teile mit einem Durchmesser des Kreiszylinders von 2 mm und einer Länge des Zylinders von 8 mm - entsprechend einem Volumen von ca. 0,025 ml - herausgearbeitet. Nach Ausspülung der Rest-Monomeren und Oligomeren mit Wasser wurden die Zylinder durch Verseifung mit Natronlauge in ein ionisches Hydrogel überführt.

Am Ende des Herstellungsverfahrens erhielt man wiederum einen festen Ausgangszylinder von ca. 0,025 ml Volumen mit einem Restwassergehalt (pyrogenfreies Wasser) von ca. Gew.-10% .

Bei der Herstellung wurde die Verseifungszeit so gewählt, dass ein Verseifungsgrad von . ca. 35% und eine Schwellungskoeffizient von ca. 20 erhalten wurde, d.h. das Volumen eines in physiologischer Kochsalzlösung gequollenen Zylinders betrug das 20-fache des ungeqollenen Ausgangszylinders.

Die zylinderförmigen Implantate wurden gemäß nachstehender Operationsbeschreibung zur Faltentherapie (Nasolabialfalte, Mundwinkelfalte), Lippenaugmentation und Defektauffüllung im Gesichtsbereich verwendet. Die Anzahl der mittels einer Applikatorkanüle einzusetzenden Zylinder ergab sich aus der Größe des Defekts und wurde präoperativ festgelegt.
a) Zunächst Anzeichnen der geplanten Stichinzision (2 mm) am lateralen Mundwinkel (oder anderer Lokalisation bei Defektauffüllung).
b) Danach Infiltration der geplanten Inzision mit wenig Lokalanästhetikum.
c) Jetzt Stichinzision mit 11-er Klinge.
d) Einbringen der Applikatiorkanüle und subkutanes Vorschieben in das Zielgebiet (Nasolabialfalte, Mundwinkelfalte, Ober- und Unterlippe).
e) Schrittweises Setzen eine Anzahl von Pellets, beginnend am obersten Zielpunkt und Fortsetzung in Richtung Inzision (Anzahl entsprechend der vorher festgelegten Länge).
f) Am Ende Verschluss der Hautinzision mit einer 5x0 Prolene-Einzelknopfnaht.

## Patentansprüche

1. Polymeres Hydrogel erhalten durch die Copolymerisation eines Acrylsäureesters mit N-Vinylpyrrolidon, **dadurch gekennzeichnet, dass**
A) weniger als 100 % der Estergruppen des Copolymerisats zur freien Carboxylgruppe verseift sind;
B) das Gewichtsverhältnis zwischen dem Acrylsäureester und dem N-Vinylpyrrolidon im Bereich zwischen 0,10 - 0,67 liegt; und
C) bei einer Quellung in physiologischer Kochsalzlösung der Schwellungskoeffizient 20 bis 80 beträgt.

2. Polymeres Hydrogel nach Anspruch 1, **dadurch gekennzeichnet, dass** der Acrylsäurester ein Methacrylsäureester, vorzugsweise Methyacrylsäure-methylester ist.

3. Polymeres Hydrogel nach Anspruch 1 oder 2, **dadurch gekennzeichnet, dass** mehr als 35 %, vorzugsweise mehr als 40 % der Estergruppen verseift sind.

4. Polymeres Hydrogel nach einem der Ansprüche 1 bis 3, **dadurch gekennzeichnet, dass** weniger als 75 %, vorzugsweise weniger als 70 % der Estergruppen verseift sind.

5. Polymeres Hydrogel nach einem der Ansprüche 1 bis 4, **dadurch gekennzeichnet, dass** das Gewichtsverhältnis zwischen dem Acrylsäureester und dem N-Vinylpyrrolidon im Bereich zwischen 0,33 - 0,53 liegt.

6. Polymeres Hydrogel nach einem der Ansprüche 1 bis 5, **dadurch gekennzeichnet, dass** der Schwellungskoeffizient 35 bis 60 beträgt.

7. Polymeres Hydrogel nach einem der Ansprüche 1 bis 6, **dadurch gekennzeichnet, dass** sein pH-Wert im Bereich von 6,4 bis 7,9, vorzugsweise von 6,7 bis 7,3 liegt.

8. Polymeres Hydrogel nach einem der Ansprüche 1 bis 7, **dadurch gekennzeichnet, dass** es weniger als 0,01 Gew.-%, vorzugsweise weniger als 0,001 Gew.-% Restmonomere enthält.

9. Polymeres Hydrogel nach einem der Ansprüche 1 bis 8, **dadurch gekennzeichnet, dass** das Copolymerisat in einem wässerigen Medium nicht degradierbar oder resorbierbar ist.

10. Verwendung des polymeren Hydrogels nach einem der Ansprüche 1 bis 9 als quellbares Dauerimplantat zur Vergrösserung der Brust oder zur Auffüllung von Hautfalten.

11. Verwendung nach Anspruch 10, **dadurch gekennzeichnet, dass** das Dauerimplantat vor der Quellung durch Aufnahme von Körperflüssigkeit eine kugelförmige Gestalt aufweist und der Kugeldurchmesser vorzugsweise 6 - 15 mm beträgt.

12. Verwendung nach Anspruch 10, **dadurch gekennzeichnet, dass** das Dauerimplantat vor der Quellung durch Aufnahme von Körperflüssigkeit eine zylinderförmige Gestalt aufweist und der Kreiszylinderdurchmesser vorzugsweise 0,5 bis 3 mm beträgt

13. Verwendung nach Anspruch 12, **dadurch gekennzeichnet, dass** das Verhältnis UD zwischen Zylinderlänge L und dem Kreiszylinderdurchmesser D im Bereich von 1,5 bis 5,0, vorzugsweise von 2,0 - 4,0 liegt.

14. Verwendung nach einem der Ansprüche 10 bis 13, **dadurch gekennzeichnet, dass** das Dauerimplantat aus 2 - 30, vorzugsweise aus 3-20 Teilimplantaten besteht.

15. Verwendung nach einem der Ansprüche 10 -14, **dadurch gekennzeichnet, dass** das Dauerimplantat oder die einzelnen Teilimplantate - vor einer Quellung durch Aufnahme von Wasser - ein Volumen von 0,01 - 2,00 ml aufweisen.

16. Verwendung nach einem der Ansprüche 10 bis 15, **dadurch gekennzeichnet, dass** das Dauerimplantat - vor einer Quellung durch Aufnahme von Körperflüssigkeit - einen Wassergehalt von weniger als 15 Gew.% aufweist.

17. Verwendung nach einem der Ansprüche 10 bis 16, **dadurch gekennzeichnet, dass** das Verhältnis P/D zwischen dem Prozentsatz P verseifter Estergruppen und dem mittleren Durchmesser D des Dauerimplantates oder der einzelnen Teilimplantate im Bereich von 2,4 bis 12,0, vorzugsweise von 3,0 bis 10,0 liegt.

18. Verwendung nach einem der Ansprüche 10 bis 17, **dadurch gekennzeichnet, dass** das Dauerimplantat oder die einzelnen Teilimplantate keine Umhüllung aufweist.

## Claims

1. Polymeric hydrogel, obtained by copolymerization of an acrylate ester with N-vinylpyrrolidone, **characterized in that**
A) less than 100% of the ester groups of the copolymer are saponified to free carboxyl groups;
B) the ratio by weight of acrylate ester to N-vinylpyrrolidone ranges from 0.1 to 0.67; and
C) when swelling said hydrogel in a physiological salt solution, the coefficient of swelling is 20 to 80.

2. The polymeric hydrogel of claim 1, **characterized in that** the acrylate ester is a methacrylate ester, preferably methyl methacrylate.

3. The polymeric hydrogel of claims 1 or 2, **characterized in that** more than 35% and preferably more than 40% of the ester groups are saponified.

4. The polymeric hydrogel of one of the claims 1 to 3, **characterized in that** less than 75% and preferably less than 70% of the ester groups are saponified.

5. The polymeric hydrogel of one of the claims 1 to 4, **characterized in that** the ratio by weight of acrylate ester two N-vinylpyrrolidone ranges from 0.1 to 0.67 and preferably from 0.33 to 0.53.

6. The polymeric hydrogel of one of the claims 1 to 5, **characterized in that** said coefficient of swelling is 35 to 60.

7. The polymeric hydrogel of one of the claims 1 to 6, **characterized in that** pH ranges from 6.4 to 7.9 and preferably from 6.7 to 7.3.

8. The polymeric hydrogel of one of the claims 1 to 7, **characterized in that** it contains less than 0.01% by weight and preferably less than 0.001% by weight of a residual monomer.

9. The polymeric hydrogel of one of the claims 1 to 8, **characterized in** the copolymer is not degradable or absorbable in an aqueous medium.

10. Use of the polymeric hydrogel of one of the claims 1 to 9 as a swellable permanent implant for enlarging the breast or for filling folds in the skin.

11. The use of claim 10, **characterized in that** the permanent implant, before it swells by taking upper bodily fluid, has a spherical configuration and the diameter of the sphere preferably is 6 to 15 mm.

12. The use of claim 10, **characterized in that** the permanent implant; before it swells by taking up bodily fluid, has a cylindrical configuration and the diameter of the circular cylinder preferably 0.5 to 3 mm.

13. The use of claim 12, **characterized in that** the ratio of the length L of the cylinder to the diameter D of the circular cylinder ranges from 1.5 to 5.0 and preferably front 2.0 to 4.0.

14. The use of one of the claims 10 to 13, **characterized in that** the permanent implant consists of 2 to 30 and preferably of 3 to 20 partial implants.

15. The use of one of the claims 10 to 14, **characterized in that** the permanent implant or the individual partial implants, before they swell by taking up water, have a volume of 0.01 to 2.00 mL

16. The use of one of the claims 10 to 15, **characterized in that** the permanent implant, before it swells by taking up bodily fluid, has a water content of less than 15% by weight.

17. The use of one of the claims 10 to 16, **characterized in that** the ratio of the percentage P of saponified ester groups to the average diameter D of the permanent implant or the individual partial implants ranges from 2.4 to 12.0 and preferably from 3.0 to 10.0.

18. The use of one of the claims 10 to 17, **characterized in that** permanent implants or the individual partial implants do not have a coating.

## Revendications

1. Hydrogel polymère obtenu par copolymérisation d'un ester d'acide acrylique avec de la N-vinylpyrrolidone, **caractérisé en ce que**
A) moins de 100% des groupes ester du copolymère sont saponifiés en groupe carboxyle libre ;
B) le rapport pondéral entre l'ester d'acide acrylique et la N-vinylpyrrolidone se situe entre 0,10 et 0,67 ; et
C) le coefficient de gonflement lors d'un gonflement dans un sérum physiologique varie de 20 à 80.

2. Hydrogel polymère selon la revendication 1, **caractérisé en ce que** l'ester d'acide acrylique est un ester d'acide méthacrylique, de préférence l'ester méthylique de l'acide méthacrylique.

3. Hydrogel polymère selon la revendication 1 ou 2, **caractérisé en ce que** plus de 35%, de préférence plus de 40%, des groupes ester sont saponifiés.

4. Hydrogel polymère selon l'une quelconque des revendications 1 à 3, **caractérisé en ce que** moins de 75%, de préférence moins de 70%, des groupes ester sont saponifiés.

5. Hydrogel polymère selon l'une quelconque des revendications 1 à 4, **caractérisé en ce que** le rapport pondéral entre l'ester d'acide acrylique et la N-vinylpyrrolidone se situe entre 0,33 et 0,53.

6. Hydrogel polymère selon l'une quelconque des revendications 1 à 5, **caractérisé en ce que** le coefficient de gonflement varie de 35 à 60.

7. Hydrogel polymère selon l'une quelconque des revendications 1 à 6, **caractérisé en ce que** son pH varie de 6,4 à 7,9, de préférence de 6,7 à 7,3.

8. Hydrogel polymère selon l'une quelconque des revendications 1 à 7, **caractérisé en ce qu'**il contient moins de 0,01% en poids, de préférence moins de 0,001 % en poids de monomères résiduels.

9. Hydrogel polymère selon l'une quelconque des revendications 1 à 8, **caractérisé en ce que** le copolymère n'est ni dégradable ni résorbable dans un milieu aqueux.

10. Utilisation de l'hydrogel polymère selon l'une quelconque des revendications 1 à 9 en tant qu'implant permanent gonflable à des fins d'augmentation mammaire ou de comblement des rides.

11. Utilisation selon la revendication 10, **caractérisée en ce que** l'implant permanent présente une forme sphérique avant le gonflement résultant de l'absorption de fluide corporel et le diamètre de la sphère est de préférence de 6 à 15 mm.

12. Utilisation selon la revendication 10, **caractérisée en ce que** l'implant permanent présente une forme cylindrique avant le gonflement résultant de l'absorption de fluide corporel et le diamètre du cylindre circulaire est de préférence de 0,5 et 3 mm.

13. Utilisation selon la revendication 12, **caractérisée en ce que** le rapport UD entre la longueur L du cylindre et le diamètre D du cylindre circulaire varie de 1,5 à 5,0, de préférence de 2,0 à 4,0.

14. Utilisation selon l'une quelconque des revendications 10 à 13, **caractérisée en ce que** l'implant permanent se compose de 2 à 30, de préférence de 3 à 20 éléments d'implants.

15. Utilisation selon l'une quelconque des revendications 10 à 14, **caractérisée en ce que** l'implant permanent ou les éléments d'implant individuels présentent un volume compris de 0,01 à 2,00 mL avant gonflement par absorption d'eau.

16. Utilisation selon l'une quelconque des revendications 10 à 15, **caractérisée en ce que** l'implant permanent présente une teneur en eau inférieure à 15% en poids avant gonflement par absorption de fluide corporel.

17. Utilisation selon l'une quelconque des revendications 10 à 16, **caractérisée en ce que** le rapport P/D entre le pourcentage P des groupes ester saponifiés et le diamètre moyen D de l'implant permanent ou des éléments d'implant individuels varie de 2,4 à 12,0, de préférence de 3,0 à 10,0.

18. Utilisation selon l'une quelconque des revendications 10 à 17, **caractérisée en ce que** l'implant permanent ou les éléments d'implant individuels ne présentent aucune enveloppe.
